# EUROPEAN PATENT SPECIFICATION

(11) **EP 2 485 605 B1**
(45) Date of publication and mention of the grant of the patent: **24.06.2020**
(21) Application number: 11749500.2
(22) Date of filing: 01.08.2011
(51) Int. Cl.: A23L 5/47

(54) **GREEN COLORING OF TABLE OLIVES WITH CHLOROPHYLL COMPOUNDS**
GRÜNFÄRBUNG VON TAFELOLIVEN MIT CHLOROPHYLL-VERBINDUNGEN
COLORATION EN VERT D'OLIVES DE TABLE AU MOYEN DE COMPOSÉS DE CHLOROPHYLLE

(30) Priority: 11.08.2010 GR 20100100450
(43) Date of publication of application: 15.08.2012
(73) Proprietor: TZIOUMAKIS, Christos, 33200 Itea Fokida (GR); Tzioumakis, Sotirios, 33200 Itea Fokida (GR)
(72) Inventor: TZIOUMAKIS, Christos, 33200 Itea Fokida (GR); Tzioumakis, Sotirios, 33200 Itea Fokida (GR)
(86) International application number: PCT/GR2011/000030
(87) International publication number: WO 2012/020269

(56) References cited:
- DE-A1- 10 359 537
- US-A- 5 482 727
- US-A- 5 620 726
- US-A- 5 993 880
- MARÍA ROCA ET AL: "Control of Olive Oil Adulteration with Copper-Chlorophyll Derivatives", JOURNAL OF AGRICULTURAL AND FOOD CHEMISTRY, vol. 58, no. 1, 13 January 2010 (2010-01-13), pages 51-56, XP55012099, ISSN: 0021-8561, DOI: 10.1021/jf902084d
- LOURDES GALLARDO-GUERRERO ET AL: "Physicochemical Conditions Modulating the Pigment Profile in Fresh Fruit ( Olea europaea Var. Gordal ) and Favoring Interaction between Oxidized Chlorophylls and Endogenous Cu", JOURNAL OF AGRICULTURAL AND FOOD CHEMISTRY, vol. 55, no. 5, 1 March 2007 (2007-03-01), pages 1823-1831, XP55012067, ISSN: 0021-8561, DOI: 10.1021/jf0630771
- MINGUEZ-MOSQUERA M I ET AL: "Preparation of Cu(II) complexes of oxidized chlorophylls and their determination by thin-layer and high-performance liquid chromatography", JOURNAL OF CHROMATOGRAPHY, ELSEVIER SCIENCE PUBLISHERS B.V, NL, vol. 731, no. 1, 19 April 1996 (1996-04-19), pages 261-271, XP004039276, ISSN: 0021-9673, DOI: 10.1016/0021-9673(95)01212-5

## Description

The present invention concerns the procedure for coloring green olives, treated or untreated that are whole olives, pitted and olive pieces, using alkaline water solutions of Chlorophyll, Chlorophyllin and Copper Chlorophyllin salts.

It is known that the natural extracts of Chlorophyll, Chlorophyllin and Copper Chlorophyllin salts are used for the manufacture of sweets, ice-creams and conserved vegetables without any dangerous impact on health and are allowed to be used by the European Union (directive 20008/128EK 22-12-2008) and by the Federal Drugs and Foods Administration service of the United States of America (Federal Register Final Rule 67 FR 35429-May 20, 2002), producing a green bright color.

Until now we find the copper complexes of Chlorophylls Derivatives in adulteration of olive oil and other vegetable olives, to improve the color that Maria Roca et al, proposed an analytical method to detect the adulteration using HPLC-DAD analysis in the Journal of Agricultural and Food Chemistry vol.58, no.1 (201-01-13) page 52-56. In US patent 5620726 A (CASAMASSIMA PIETRO (IT) 15 April 1997 (1997-04-15) we find, change the color of table olives in red color with the use of artificial color erythrosine.

In another US patent 5482727 A (LABORDE LUKE (US) 9 January 1996 (1996-01-09) we find a method to improve the color of green vegetables, using methods like, (a) blanching the vegetables for an extended period of time; (b) packing the blanched vegetables into a container along with an aqueous packing solution containing zinc or copper ions; (c) sealing the container; and (d) subjecting the containerized vegetables and packing solution to a sterilization process. Document DE10359537 discloses several processes aiming at aromatising, conserving or colouring vegetable products with main focus on french fries. When colouring with the green colour is to be achieved, copper chlorophyll is disclosed as suitable colouring substance.

The treated and un-treated green olives, during the treatment to remove the bitter taste, to be fermented in a solution of sodium chloride and during the preservation in tank with brine in presence of organic acids that adjust the PH, they lose most of the Chlorophyll amount they contained and acquire a yellow, light yellow- green and sometimes a yellow- brown color.

Through this method whole olives, pitted olives, stuffed olives and chopped olives acquire a uniform green natural color.

The purpose of this invention is to confer a uniform bright green color to treated and untreated whole olives, pitted olives, olive rounds chopped in quarters and halves. This purpose was achieved by immersing them in an alkaline, aqueous solution of natural Chlorophyll, Chlorophyllin or Copper Chlorophyllin salts. The invention is defined by claim 1.

In the process of the present invention whole olives, pitted olives or olive pieces are immersed, in each case, in a water solution which contains Sodium Hydroxide in a concentration of 0.01 -3.5%, depending on the maturity and the fermentation degree of the olives, adding one of the natural Chlorophyll, Chlorophyllin or Copper Chlorophyllin salts in a concentration of 0.005-0.9%. The olives remain in this solution for 6-16 hours, are subsequently washed with water and then new water is added which contains citric acid 0.1-0.3% ascorbic acid 0.1-0.15%. They remain there until the remaining of Sodium Hydroxide is removed. The last procedure is repeated until the pH of the system reaches a value of less than 4.6.

The product is ready to be preserved into glass, plastic or tinplated containers with a filling fluid consisting of a solution of Sodium Chloride in a concentration ranging from 0.0 - 7% depending on the consumers' wishes. The filling fluid pH is adjusted by organic acids to a value of less than 4.6.The containers are firmly closed and are pasteurized by a heating treatment or treatment by neutral gas, or any other kind of packaging process according to Good Manufacturing Process.

The product, the whole olives, pitted olives or olive pieces can be preserved in containers not firmly closed, by adding brine containing salt in a concentration of more than 4% in the presence of organic acids like Citric acid, Ascorbic acid and Lactic acid so that the system reaches a pH value of less than 4.6.

The presence of the preservative Potassium Sorbate within the permitted limits by the law up to 0.1% is desirable.

The following examples are given in view of the further explanation of the present invention. It must be taken into consideration that the percentages mentioned in the following examples mean weight percentages and the maturity of the raw material is in the middle of the harvest period.

### Example 1

Five hundred grams of whole treated olives mid harvest period, undergone full fermentation, with remaining sugars of less than 0.04%, are set into 480 grams of water containing 15 grams of Sodium Hydroxide and 0.9 grams of Copper Chlorophyllin and remain therein for 7-12 hours depending on the ambient temperature. The solution is removed and the olives are washed for the removal of the alkaline components and the excess of Copper Chlorophyllin. The olives are set in 520 grams of water which contains 0, 6 grams of Ascorbic acid and 1 gram of Citric acid. They remain there until the pH reaches a value of less than 4.6. If this is not achieved, the solution is removed and a new identical solution is used. A third effort may be needed, depending on the way the olives are washed. The ready olives are preserved in a tinplated container with a filling fluid of Sodium Chloride solution of a concentration of 3% and Citric acid for adjusting the pH of the system to a value of less than 4.2. The jar, then, is pasteurized in a temperature of 75 °C for 8-25 minutes and then immediately cooled to ambient temperature.

### Example 2

Four hundred and twenty grams of treated olives without a pit, mid period harvested and undergone a full fermentation, with remaining sugars of less than 0.04%, are set in 480 grams of water containing 13 grams of Sodium Hydroxide and 0.9 grams of Copper Chlorophyllin. They remain there for 7-10 hours, depending on the ambient temperature. Then, the solution is removed and the olives are washed for from the removal of the alkaline components and the excess of Copper Chlorophyllin. They are set in 520 grams of water which contains 0.6 grams of Ascorbic acid and 1 gram of Citric acid. They remain there until the pH reaches a value of less than 4.6. If this is not achieved, the solution is removed and a new identical solution is used. A third effort may be needed, depending on the way the olives are washed. The ready olives are set in 520 grams of brine which contains 10% Sodium Chloride, 0.1% Potassium Sorbate and 0.8% Lactic acid, in a jar with screw cap.

## Claims

1. A process for coloring treated and untreated green olives by the use of one of the Chlorophyll, Chlorophyllin or Copper Chlorophyllin salts that involves:
a) Soaking the salt out of the olives in a 0-7% Sodium Chloride solution.
b) Immersing the olives in a fluid solution containing 0.006-3.5% Sodium Hydroxide and one of the Chlorophyll, Chlorophyllin or Copper Chlorophyllin salts in a concentration of 0.005-0.9% in a ratio of olive to liquid 0.45-4 (w/w) and allowing them to remain in this solution for 6-16 hours.
c) Removing the alkaline solution, washing with water and immersing in a fluid solution containing an acid such as Lactic, Citric, Ascorbic or Hydrochloric acid. The olives remain in the fluid solution until the pH of the system becomes less than 4.6. More acid can be added for the achievement of the desired pH value.

2. A process according to claim 1, wherein the olives after the process steps a), b) and c)are preserved in firmly closed containers with a filling fluid containing an solution of sodium chloride in a concentration of 0-7% with acid addition until the pH of the system becomes less than 4.6. The containers are pasteurized in 68-80° C for a period of 25-30 minutes and then immediately cooled to ambient temperature.

3. A process according to claim 1, wherein the olives after the process steps a), b) and c), are set in a container not firmly closed containing brine as a filling fluid, with a concentration of Sodium Chloride of 3-10%, Potassium Sorbate 0-0.1% as a perservative, Lactic acid 0.1-1% and antioxidant ascorbic acid 0-0.2% and citric acid 0-1%.

4. A process according to claim 1, wherein the ready olives are set in a container (tin, plastic, or glass) under vacuum.

5. A process according to claims 1 - 4, wherein instead of green treated or untreated olives, pitted green treated or untreated olives, after the removal of pits in special machines, can be used.

6. A process according to claims 1-5, wherein the green treated or untreated pitted olives can be in the form of a slice, half pitted olive or quarter pitted olive.

7. A process according to claims 1-4, wherein natural olives as they come from the tree, can be used.

## Patentansprüche

1. Ein Verfahren zur Einfärbung von behandelten und unbehandelten grünen Oliven durch Chlorophyll-, Chlorophyllin- oder Kupfer-Chlorophyllin-Salze, das folgendes umfasst:
a) Einweichen der Oliven in einer 0-7% Natriumchlorid-Lösung, um das Salz herauszusaugen.
b) Eintauchen der Oliven in eine flüssige Lösung, die 0.006-3.5% Natriumhydroxid und eines von den Chlorophyll-, Chlorophyllin- oder Kupfer-Chlorophyllin-Salzen in einer Konzentration von 0.005-0.9%, In einem Verhältnis zwischen Oliven und Flüssigkeit von 0.45-4 (w/w) enthält, und in dieser Lösung 6-16 Stunden bleiben lassen.
(c) Entfernung der alkalischen Lösung, Spülung mit Wasser und Eintauchen in eine flüssige säurehaltige Lösung, die z.B. Milch-, Zitronen-, Ascorbin- oder Chlorwasserstoffsäure enthält. Die Oliven bleiben in der flüssigen Lösung, bis der pH-Wert des Systems weniger als 4.6 beträgt. Zur Erreichung des gewünschten pH-Wertes kann mehr Säure hinzugefügt werden.

2. Ein Verfahren nach Anspruch 1, wobei die Oliven nach Verfahrensschritten a), b) und c) in fest verschlossenen Behältern mit einer Füllflüssigkeit bewahrt werden, die eine Natriumchlorid-Lösung in einer Konzentration von 0-7% enthält und Säurezugabe, bis der pH-Wert des Systems weniger als 4.6 beträgt. Die Behälter werden bei 68-80°C für eine Periode von 25-30 Minuten pasteurisiert und gleich darauf auf Umgebungstemperatur abgekühlt.

3. Ein Verfahren nach Anspruch 1, wobei die Oliven nach Verfahrensschritten a), b) und c), in einen nicht fest verschlossenen Behälter gelegt werden, der Lauge als Füllflüssigkeit enthält, mit einer Konzentration von 3-10% Natriumchlorid, 0-0.1% Kaliumsorbat als Konservierungsstoff, 0.1-1% Milchsäure und 0-0.2% antioxidierende Ascorbinsäure und 0-1% Zitronensäure.

4. Ein Verfahren nach Anspruch 1, wobei die fertigen Oliven in einen Behälter (aus Blech, Kunststoff oder Glas) unter Vakuum gesetzt werden.

5. Ein Verfahren nach Ansprüchen 1-4, wobei, anstelle von grünen behandelten oder unbehandelten Oliven, entkernte grüne behandelte oder unbehandelte Oliven nach der in Sondermaschinen erfolgten Kernentfernung benutzt werden können.

6. Ein Verfahren nach Ansprüchen 1-5, wobei die grünen behandelten oder unbehandelten Oliven die Form von Scheiben, entkernten Hälften oder entkernten Viertein von Oliven haben können.

7. Ein Verfahren nach Ansprüchen 1-4, wobei natürliche, vom Baum gepflückte Oliven verwendet werden können.

## Revendications

1. Procédé de coloration des olives vertes traitées ou non traitées en utilisant de l'un des sels de chlorophylle, de chlorophylline or de chlorophylline cuivrique qui Implique :
a) le dessalage des olives en les trempant dans une solution de chlorure de sodium de 0 à 7%.
b) l'immersion des olives dans une solution fluide contenant de l'hydroxyde de sodium à 0.006-3.5% et l'un des sels de chlorophylle, de chlorophylline ou de chlorophylline cuivrique à une concentration de 0.005-0.9%, dans un rapport olive/liquide de 0.45-4 (p/p) en les laissant tremper dans cette solution pour une durée de 6 à 16 heures.
(c) l'élimination de la solution alcaline, le lavage à l'eau et l'immersion dans une solution fluide contenant un acide tel que l'acide lactique, citrique, ascorbique ou chlorhydrique. Les olives sont conservées dans la solution fluide jusqu'à ce que le pH du système devienne inférieur à 4.6. Plus d'acide peut être ajouté pour atteindre la valeur pH souhaitée.

2. Procédé selon la revendication 1, dans lequel les olives, après les étapes de traitement a), b) et c), sont conservées dans des récipients solidement fermés avec un fluide de remplissage contenant une solution de chlorure de sodium à une concentration de 0-7% tout en y ajoutant de l'acide Jusqu'à ce que le pH du système devienne inférieur à 4.6. Les récipients sont pasteurisés à une température comprise entre 68-80°C pour une durée de 25-30 minutes puis immédiatement refroidis à température ambiante.

3. Procédé selon la revendication 1, dans lequel les olives, après les étapes de traitement a), b) et c), sont placées dans un récipient qui n'est pas solidement fermé contenant comme fluide de remplissage de la saumure ayant une concentration de chlorure de sodium de 3-10%, de sorbate de potassium de 0-0.1% comme conservateur, d'acide tactique de 0.1-1%, d'acide ascorbique antioxydant de 0-0.2% et d'acide citrique de 0-1%.

4. Procédé selon la revendication 1, dans lequel les olives prêtes sont mises sous vide dans un récipient (en étain, plastique ou verre).

5. Procédé selon les revendications 1-4, dans lesquels, au lieu des olives vertes traitées ou non traitées, des olives vertes dénoyautées traitées ou non traitées sont utilisées après l'élimination des noyaux grâce à des machines spéciales.

6. Procédé selon les revendications 1-5, dans lesquels les olives vertes traitées ou non traitées peuvent être en forme de tranches, dénoyautées et coupées en deux ou dénoyautées et coupées en quartiers.

7. Procédé selon les revendications 1-4, dans lesquels des olives naturelles provenant directement des arbres peuvent être utilisées.
